# EUROPEAN PATENT SPECIFICATION

(11) **EP 1 152 833 B1**
(45) Date of publication and mention of the grant of the patent: **18.02.2004**
(21) Application number: 99963624.4
(22) Date of filing: 17.12.1999
(51) Int. Cl.: B03B 9/06, D21B 1/02, C10B 53/00

(54) **METHOD AND PRODUCTION PLANT FOR THE MANUFACTURE OF FIBROUS MATERIAL**
VERFAHREN UND ANLAGE ZUR HERSTELLUNG VON FASERWERKSTOFFEN
PROCEDE ET USINE DE PRODUCTION DE MATIERE FIBREUSE

(30) Priority: 17.12.1998 FI 982737
(43) Date of publication of application: 14.11.2001
(73) Proprietor: Metso Paper, Inc., 00130 Helsinki (FI)
(72) Inventor: SIPILÄ, Kai, FIN-02200 Espoo (FI); JOHANSSON, Allan, FIN-00150 Helsinki (FI); KARLSSON, Markku, FIN-21600 Parainen (FI); RISTOLA, Petri, FIN-00630 Helsinki (FI)
(74) Representative: Leson, Thomas Johannes Alois, Dipl.-Ing.
(86) International application number: PCT/FI1999/001056
(87) International publication number: WO 2000/035588

(56) References cited:
- WO-A1-95/12549
- GB-A- 1 364 474
- GB-A- 2 026 019
- US-A- 3 765 921

## Description

The invention relates to a method of arranging the raw material, energy and waste management of a production plant manufacturing pulp and/or paper and/or board from recycled fibres, which method uses waste paper and/or board produced by a residential community as fibre raw material of the production plant to a considerable extent.

The invention also relates to a production plant manufacturing pulp and/or paper and/or board, which plant is arranged to use as fibre raw material waste paper and/or board obtained from an adjacent residential community, and which plant comprises equipment needed in the manufacture of pulp and/or paper and/or board and an energy production unit for producing energy for at least the production plant's own requirements.

More specifically, the invention relates to a method and a production plant which seek to utilize simultaneously in compliance with sustainable development different fractions of community wastes in an economical manner, whereby the net load caused by the whole to the environment is reduced. The mode of operation that will be described further on in the application is an example of a new trend, Industrial Ecology, in which the object described above can be achieved by optimizing the whole.

Continued intense urbanization and growing consumption bring many problems, one of which is constituted by the increasing waste streams of big cities and their treatment or processing in a manner which is economical and ecologically sustainable. The requirements imposed on the waste management of communities have continued to increase not only with increasing waste volumes but also as a result of tightening official regulations. More efficient recycling and recovery of used materials than heretofore will be required in the next few years. Conventional waste disposal and processing means - transport to a landfill or incineration in a waste incineration plant - are no longer competitive. Densely populated communities are beginning to be short of areas of land suitable for serving as landfills, which makes waste transport distances longer and increases waste management costs. Furthermore, new official regulations will tighten the licence conditions of landfill sites, among other things, in the form of leachate restrictions.

Waste incineration plants have almost invariably been designed to burn so-called mixed waste in mass incineration plants. Incineration of unsorted mixed waste is profitable only when the distance of transport of wastes is short and when the charge for waste treatment or processing is high (often about 100 USD/tonne). Since the amount of combustible waste available in the near distance is often limited, the size of incineration plants is small and the significance of waste in the production of electricity is slight. The investment and operation costs of incineration plants specialized exclusively in waste incineration are higher and the efficiency of energy production is in them poorer than in conventional power plants. The efficiency of electricity production in incineration plants is usually 10 to 20 % of the energy content of fuel, which is about half of the efficiency of a coal-fired power plant. This is due to the poor quality of and a high amount of impurities in mixed waste. Because of a high chlorine content - usually 0.7 to 2 % of the weight of mixed waste - the steam temperatures in the power plant have to be kept low to prevent hot corrosion with the result that the efficiency of electricity production remains low.

According to one calculation, the Nordic consumer produces an average amount of 600 kg of waste per annum, of which 40 kg is newsprint, 140 kg other types of paper and board, 120 kg plastics and wood, and 300 kg metal, glass, compostable waste, etc. The sorting of waste on the site of its formation, in which glass, different metals, compostable waste as well as paper and board waste, plastics and other energy-containing fractions are already separated at the place of their formation in industry, commerce and households, would allow the different components of the waste stream to be utilized more efficiently than today. Until now, the problem has been the small number of economically profitable modes of use. Certain waste fractions, such as waste paper, have been partly reclaimed, but the bulk of the waste has been transported to landfills or incineration plants. However, no one has previously realized the possibility of arranging the systematic recovery of different waste fractions in connection with the manufacture of pulp, paper or board and the production of energy according to the disclosure of this patent application, which recovery makes the sorting of waste at source more sensible.

As it is now, the degree of recycling of paper fibres is low in many areas and there are pressures to enhance recycling and to replace virgin fibre material with recycled fibres to an ever-increasing extent. Recently, there has been a discussion of an idea of building a paper mill utilizing waste paper in the middle of a big city, where it would be close to both raw material sources and markets of the product. The placement of the production plant close to consumers is assessed to significantly reduce transport costs and to speed up the recycling of fibre material. The idea of an urban paper mill has been discussed, among other things, in the following articles: "Pioneering Bronx Plant To Recycle City's Paper", The New York Times, 6 May 1994; "Paper Mill Project Plants Roots in the South Bronx", BioCycle, July 1994, pp. 48―50: "Bronx Group Signs Recycling Company for Mill Project", The New York Times, 4 December 1995; "State Approves Bronx Paper-Recycling Mill", The New York Times, 12 June 1996; "Bronx newsprint project rolling after state okays tax-free bonds", Pulp & Paper Week, 24 June 1996, p. 5; "After a Clean-up, A $400 Million Paper Mill Gives New Life to a Polluted Old Bronx Rail Yard", The New York Times, 6 July 1997; "Etelä-Bronxin paperitehtaan suunnitelmat valmistuivat (Plans for South Bronx Paper Mill Completed)", Kauppalehti 16 December 1997, p. 31.

Typically, the profitability of paper and board manufacture has been dependent on the scale of production such that the larger the production unit, the better its profitability. When in using recycled fibres attempts are made to maximize logistics benefits by placing a paper mill close to consumers, the benefit of scale in paper manufacture is often lost. The lost competitive advantage shall then be sought from other factors, such as, inexpensive raw material. Transport costs and environmental impacts of transports also support such a solution. Placing a paper mill in urban surroundings additionally imposes special requirements for the technical solutions used in different stages of production.

The Voith Sulzer publication, twogether Paper Technology Journal, No. 6 (1997), pp. 16―21, has discussed the utilization of waste paper merely from the standpoint of the use of material disregarding the logistical issues and the ecological issues of industry.

GB-A-2 026 019 discloses a process for utilising refuse for the production of a fibrous starting material for making paper. In this process the refuse is sorted into a paper fraction and undesirable foreign constituents, wherein this fraction is used as an energy source and the paper fraction is used for paper-making purposes

GB-A-1 364 474 discloses a system for the treatment of waste and a paper reclamation system wherein the recovery of paper fibres from refuse is described.

The process of US-A-3 765 921 is directed to the production of calcined clay pigment from paper wastes.

In WO-A-95 12549 a method for purifying fibres from waste water of a fibreboard manufacturing process is described.

An object of the present invention is to utilize the fibre- and energy-containing fractions of wastes from a community in an economically profitable manner, in which connection a production plant will obtain recycled raw material the amount of which is larger, which is of better quality and the price of which is more favourable than in the present situation. When urban energy and fibre resources, i.e. "Urban Forest", are utilized more efficiently than before, the sorting of waste at source and the recovery of different waste fractions will become generally profitable at the same time as the need for landfills and the waste management costs of the community will be reduced.

A further object of the invention is to provide a production plant which is capable of utilizing in its production not only a significant proportion of the waste from the community but also a substantial proportion of the waste fractions produced as by-products in its own processes.

The general objectives of the invention also include enhancing the recycling of paper fibres, reducing different transport costs associated with the waste management of the community and with the operation of the production plant as well as the synergy benefits that can be achieved by integrating the operations of a power plant and a paper mill.

Until now, the profitability of paper manufacture and/or energy production has been assessed separately and only as viewed from the standpoint of one company. However, when assessing profitability, the benefits from the synergy between energy production, paper production and the surrounding community should also be taken into consideration.

With a view to achieving the objectives stated above and those that will come out later, the method according to the invention is characterized in what is stated in the characterizing clause of claim 1.

Similarly, the production plant according to the invention is characterized in what is stated in the characterizing clause of claim 21.

About half of the waste volume produced by a residential community is recyclable paper and board waste as well as packaging, plastics or wood waste suitable as fuel. In the method according to the invention, these waste fractions are utilized, on the one hand, as fibre raw material in the manufacture of pulp and/or paper and/or board and, on the other hand, as fuel when producing energy for at least the requirements of the manufacture of pulp, paper and/or board. The fibre fraction of value is separated from the material streams transported to the production plant and containing, on the one hand, waste paper and waste board and, on the other hand, combustible waste for use in the manufacture of pulp, board and/or paper. The remainder of the material streams containing wood, plastics and a fibre fraction of poor quality is used as fuel in the production of energy.

Sorted combustible waste contains, among other things, wood, plastics, board and paper either as such or included in packaging materials. Depending on the level of separation, the proportion of paper and board of the combustible waste may be as high as 40 %. The value of paper and board as fuel is lower than their value as fibre raw material, wherefore part of the fibre-containing material contained in the combustible waste is separated from the fraction passing to combustion and used as fibre raw material in the production of pulp and/or paper and/or board. Since a certain amount of wood and plastics also always gets among the fibre material separated from recovered fuel, the amount of a reject separated from pulp in connection with the pulping of waste paper increases. This reject is circulated to the production of energy for use as fuel. As there is enough inexpensive fibre raw material available, a higher level of quality than usual can be aimed for in the cleaning, screening and deinking stages of recycled pulp, so that recycled pulp of a very high quality is obtained as a result of recycling for use as raw material for paper or board either in the production plant or outside it. The somewhat larger sludge volumes than usual generated in that connection in the cleaning, screening and deinking stages are thickened and passed to the production of energy to serve as fuel. As the raw material is very inexpensive, the additional cost arising from the action aiming at a higher level of quality is marginal.

Preferably, the capacity of the production plant is designed such that it is possible to obtain substantially all the recycled fibres needed for production from the residential community, which means that transport distances remain short and, as a result of it, the price of raw material is favourable. When output is thus brought into agreement with the availability of fibre raw materials, it is generally also in proportion to the paper consumption of the community such that a substantial part of the paper or board produced by the production plant is consumed in the near distance at short transport distances from the production plant, which lowers the transport costs of products.

Different waste fractions containing raw material and energy are generated as by-products in production processes, which waste fractions are utilized in the method according to the invention within the production plant either as raw material or as energy to a considerable extent. Alternatively, said fractions are separated such that they can at least principally be used in further processes or another type of useful use outside the production plant.

As there is generally an abundance of combustible waste available, the energy production of the production plant may be designed such that energy is produced in excess of the production plant's own need, which means that there is enough electricity and heat to be also supplied for the requirements of the adjacent residential community.

Preferably, the waste paper and the waste board used as fibre raw material are already sorted in connection with collection into different fractions, such as, newsprint, white office paper and brown packing paper and packing board. Of these paper grades, those fractions can be used as fuel which, for example, because of contamination or poor quality are not suitable for being recycled. Source separation enhances the recycling of paper, improves the quality of recycled fibres and reduces the costs of collection.

Source separation also substantially improves the profitability of waste combustion. With advantage, combustible waste is further processed into recovered fuel in special plants for the manufacture of recovered fuel before it is used as fuel. This means that savings are achieved, among other things, in the transport costs of the waste to be burnt and in the reduction of its pre-processing at a power plant. The efficiency of energy production is substantially higher and the residues of combustion are less harmful than in the case where the waste to be burnt is mixed waste. The greatest benefit is obtained from the considerably increased proceeds from the sale of electricity and/or heat as compared with a conventional mass incineration plant. As the production plant utilizes as an energy source combustible dry waste generated in the surrounding community, its need for fossil fuels is reduced.

Waste may be burned, for example, in a fluidized bed boiler, but other modern combustion boilers, such as grate boilers are also a possible choice. One alternative which is particularly advantageous in the utilization of waste-derived fuel is a gasification reactor, which produces combustible gases from wastes in order to be burnt as secondary fuel in a coal-, gas- or oil-fired boiler or in a gas turbine. Gasified waste-derived fuel may typically be substituted for 5 to 40 % of the primary fuel. In connection with the same power plant there may be several gasification reactors in which different waste fractions can be gasified. As the gasification plant it is possible to use, for instance, a circulating bed reactor the operation of which is described in the article "Thermie demonstrates biomass CFB gasifier at Lahti", Modern Power Systems, February 1998, pp. 37―41. In addition, it is possible to use a pyrolysis process which converts plastics- and paper-containing waste mainly into fuel oil, which may replace fossil fuel oil.

In accordance with an advantageous embodiment of the invention, gas produced from waste-derived fuel by means of a gasification reactor is used for producing drying air for the hot-air drying of pulp, paper or board. This makes it possible to dispense with the use of steam in drying even altogether. In a conventional production plant, the single biggest steam consumer is the drying of paper (or pulp or board) by means of steam-heated drying cylinders. When cylinder-drying is replaced, for example, with impingement drying, through-flow drying or airborne web-drying, steam generation is not necessarily needed at all. The hot drying air required in drying devices may be produced either by burning gases generated in the gasification of waste or by using, for example, hot exhaust gases from a gas turbine as such. In addition to the steam-cylinder drying, the conventional production plant uses steam for raising temperature at the dispersion stage of deinking as well as in steam boxes of a press section for regulating the profile of a web. Deinking may be accomplished without any dispersion stage, especially as the yield requirement in pulp production may be compromised because of the inexpensive raw material. The steam boxes in the press section may also be dispensed with by transferring the regulation of the profile of the web so as to be performed in a dryer section in connection with impingement dryers.

When the paper drying stage is accomplished as hot-air drying totally without steam cylinders, the dryer section of the paper machine becomes considerably shorter and a significant saving is achieved in investment costs. A dryer section of a paper machine accomplished by impingement drying is described, for example, in the applicant's Fl patent application 971187. Similarly, the hot-air drying of recycled pulp intended for sale may be accomplished, for example, by means of the "Valmet Airborne Pulp Dryer" concept, which is described in the publication Valmet Paper News, No. 3 (1996), pp. 10―15. Instead of steam, drying air would be heated by means of gas burners.

The waste fractions containing raw material and energy, produced as by-products in the processes of the production plant, which waste fractions have previously generally been transported to landfills, are utilized as far as possible in the method according to the invention by passing them either to other stages of the process or to profitable use outside the production plant. Both in a fluidized bed boiler and in a gasification reactor, in addition to solid fuel, it is also possible to burn fuels in the form of sludge, the proportion of which fuels may typically be from 5 to 40 % of the fuel. The waste sludge produced in deinking and the poor quality fibre fraction no longer suitable for the manufacture of paper are used in the production of energy as fuel. The combustion of sludges from a deinking plant and from a waste water treatment plant in a fluidized bed reactor is known, for example, from the article "Eilenburg cogeneration plant combines GTCC and BFB technology", Modern Power Systems, April 1994, pp.51―57.

In accordance with an advantageous embodiment of the invention, ash produced in the combustion or gasification of waste is utilized as far as possible as filler in the manufacture of paper and/or board. The use of ash as paper filler is discussed in the document B. Krogerus, A. Moilanen, K. Sipilä, A. Johansson, "Use of Waste Paper Ash as Paper Filler", Das Papier 6A, 1997, V86―90. The most critical property of ash is its brightness. In spite of the separation of waste on the site of its formation, the composition of the ash obtained from the combustion of combustible waste varies and it may also contain substances which are harmful from the standpoint of papermaking, wherefore ash obtained from the combustion or gasification of a sorted waste paper fraction is most preferably used as paper filler. Advantageously, ash is produced in a combustion boiler or a gasification reactor separated from the other types of waste combustion, in which case the other wastes used in the production of energy do not impair the quality of ash. Alternatively, the ash used as a filler can be purified by means of after-incineration or bleached in another suitable manner.

Alkaline ash may also be used for other purposes, such as on flue gas scrubbers of power plants in the purification of flue gases to bind, for instance, chlorine or sulphur. The ash may also be used in the manufacture of cement and in earthwork. The recycling of ash reduces considerably the volume of the landfill waste produced at the production plant. This is particularly significant when for fibre raw material is used magazine paper which contains a high proportion of ash and which may contain as much as 50 % by weight of filler and coating pigments.

Paper machine arrangements known in themselves can be used in the manufacture of paper or board. It would be appropriate to use methods by which low water consumption is achieved. In this respect, the advantageous arrangements include the use of a higher forming consistency than usual as well as foam forming, which is described, among other things, in EP patent 0 150 777. Reference is also made to the applicant's FI patent applications 962176 and 962177, which describe methods of arranging water circulation loops by means of which the consumption of fresh water at a paper mill can be minimized.

Preferably, the paper mill uses as its fresh water purified waste water taken from a waste water treatment plant of the residential community, whereby the need for raw water taken from water bodies is substantially reduced. The requirement for fresh water may also be diminished by distilling waste waters by means of waste heat from the power plant. The heat content of the waste waters generated in the mill can be utilized in the purification of waste waters from the residential community.

The residential community produces, as known, many kinds of paper waste, of which newsprint, white office paper and brown board may be mentioned as the most important fractions. Each waste paper fraction has its own applications and all fibre materials are not suitable for the manufacture of all paper grades. Waste paper can be used, among other things, as raw material for newsprint, soft tissue, writing and printing papers as well as for board. One advantageous method of utilizing efficiently different types of fibre materials is to employ multi-layer web forming in the paper machine, in which connection the different layers of paper or board may be made from different fibre compositions. The arrangement may be accomplished either by means of a multi-layer headbox or as a multi-wire solution. A second alternative is a paper mill which comprises two or more paper manufacturing lines on which different paper grades may be manufactured from the available fibre raw material. In this case, synergy benefit can be achieved not only by efficient utilization of the fibre raw material resources but also by combining water circulations of different lines, in which connection the fibre waste from one line can be used as raw material on another line. A third alternative for efficient utilization of the fibre resources is a papermaking line on which different paper grades can be flexibly manufactured from different raw materials.

One advantageous embodiment of a paper mill with several production lines comprises crosswise integrated pulp and water systems. The aim is to improve the overall efficiency of the use of the fibre material and to reduce the water consumption of the mill. For example, broke and exhaust waters from a deinking line intended for the manufacture of newsprint can be used on a board machine. At a paper mill of several production lines, the synergy of spare parts in the production lines can also be utilized in respect of similar constructions, whereby the value of the capital tied up in the stock of spare parts will not increase to an unreasonably high level even at a small scale production plant.

As a special application, a mention may be further made of the manufacture of a barrier layer for the purpose of increasing the converting value of the board grade by using plastics material which is made by processing waste plastics on a converting line or in a converting plant.

Similarly, in a production plant which has the necessary facilities for controlled regulation of the production volume by varying the running speed of a production line or production lines within fairly large limits, it is also possible to utilize the modern papermaking technology at least in applicable parts. The machine may comprise a closed draw at least in significant machine segments for control of the web and for elimination or controlled limitation or allowance of its curl/shrinkage in some direction of the machine. Advantageously, the production plant has automated monitoring and an automated control system for the operation of the machine.

The integration of waste management, energy production and papermaking in the manner described in the application reduces the waste management costs of both the community and the paper mill and makes it possible for the paper mill to obtain inexpensive energy and raw material. The solution is advantageous from the standpoint of transport and storage operations of the paper mill. The waste from the community can be utilized as an energy source and it may replace non-renewable energy sources. The recycling of fibre raw material is made more efficient. Synergy benefits can also be achieved by combining the waste water management of the community and that of the paper mill.

The manufacture of recycled paper close to the source of raw material and the area of consumption enhances the recycling of paper fibres and makes it economically more sensible than previously. Transport costs and the environmental nuisances caused by the transports are considerably reduced. When the recycling rate of fibres increases, the need for raw material and capital tied up in the production chain is substantially reduced. The fibre part which has been passed through in several recycling cycles and which has deteriorated in quality, can be utilized in an advantageous and smooth manner as fuel in the production of energy instead of known transport to a landfill.

In the following, the invention will be described by way of example with reference to the figures of the accompanying drawings, to the details of which the invention is, however, not intended to be narrowly confined.

Figure 1 shows generally the progress of material and energy streams within a production plant manufacturing paper or board as well as between the production plant and a community.

Figure 2 is an example of material and energy streams in a one-line production plant.

Figure 3 is an example of material and energy streams in a two-line production plant.

Figure 4 is an example of material and energy streams in a production plant manufacturing market pulp.

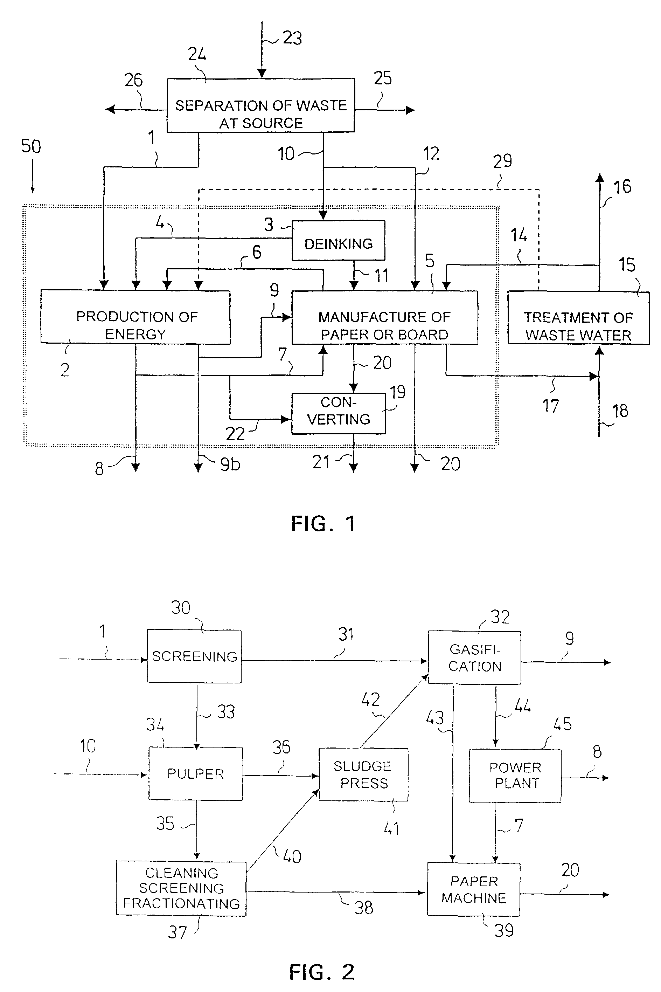

Fig. 1 schematically depicts synergic cooperation between a production plant 50 and a residential community surrounding it in the field of raw material, energy and waste management. Of the internal operations of the production plant 50, the figure shows an energy production unit 2, a deinking plant 3, a paper or board manufacturing unit 5, and a paper or board converting unit 19. Source separation 24 and a waste water treatment plant 15 of the residential community are depicted of the operations of the community surrounding the production plant 50.

Of the waste 23 generated by the residential community, paper and board waste 10 suitable for recycling and combustible waste 1 which is suitable for the production of energy and which contains wood, combustible plastics as well as some paper and board are already separated at the places where the waste is produced. These said recyclable waste fractions 1 and 10 are transported to the production plant 50 situated nearby for use, on the one hand, as fuel in the production 2 of energy and, on the other, as fibre raw material in the manufacture 5 of paper or board. When the production plant 50 is capable of utilizing as much as half of the waste volume generated by the community, complete separation of the waste on the site of its formation becomes profitable and sensible. Other recyclable fractions 25 of the waste from the residential community can be composted or recycled for recovery (plastics, metal, glass, etc.) and only a small part of waste 26 has to be transported to a landfill or to the processing of hazardous waste. The amount of waste to be land-filled will then be substantially diminished, even by 70 to 85 %.

The waste fraction 1 suitable for combustion is transported, sorted when needed into quality classes and fractions required by combustion processes, to the energy production unit 2 of the production plant where it is pre-processed. The pre-processing of fuel may include metal separation and/or identification of non-desirable pieces based on machine vision. Even though the waste can be supplied in relatively large pieces into a combustion boiler operating by a fluidized bed technique, some kind of crushing is also generally required. The quality of the fuel to be passed into the boiler is assured by means of the source separation and the manufacture of recovered fuel (REF) in connection with it.

The energy production unit 2 includes either a combustion boiler directly utilizing the waste-derived fuel 1 or a gasification reactor which produces combustible gases from the waste-derived fuel 1 in order to be burnt in a power plant boiler proper or in a gas turbine plant. Moreover, by means of the gasification reactor it is possible to produce combustion gas for use in production processes for the drying of paper or board, for example, in infrared dryers or in other drying devices, such as in impingement or airborne web-dryers.

Rejects and fibre- and filler-containing sludges 4 produced in the pulping and deinking 3 of the fibre raw material 10 are passed to the energy production plant 2 in order to be burnt or gasified together with solid waste 1. Fibre wastes 6 from the papermaking process 5 may also be burnt at the power plant 2. When needed, the dry solids content of the sludge may be raised by removing water from it either mechanically or by evaporation by means of waste heats from the process. Waste sludges 29 generated in the waste water treatment plant 15 of the community can also be disposed of by burning them in the energy production unit 2 of the production plant 50.

The energy production unit 2 of the production plant supplies the production processes of recycled pulp and paper with energy 7 required by them in the form of electricity and steam or alternatively as combustible gases, which may be used for the production of drying air for air-drying devices. When the adjacent community usually produces an abundance of combustible waste 1, the energy production 2 of the production plant 50 may be designed to generate energy in excess of its own need and the plant is thus capable of delivering electricity and heat 8 for the requirements of the surrounding community, too.

The ash produced in the combustion of waste is utilized as far as possible in the paper manufacture 5 as filler 9. The most suitable filler is the ash produced in the combustion of a sorted waste paper fraction or of a deinking sludge of waste paper, which ash may be further refined, when needed, by after-incineration or by other bleaching methods (not shown). In addition to the manufacture of paper, calciferous ash generated in the combustion of waste can be used on a flue gas scrubber of the power plant for the cleaning of flue gases. Ash may also be delivered outside (9b) the production plant for use in the manufacture of cement as a raw material, in earthwork or for other equivalent uses.

The production plant 50 uses as its principal fibre raw material waste paper 10 collected from the surrounding residential community. Since both the raw material source and consumers are near, transport distances will be short and the production plant does not require large intermediate stocks. The production capacity of the production plant has been designed such that the adjacent residential community is able to generate substantially all the fibre raw material 10 required in the production of paper or board and, similarly, the community is able to consume substantially all the paper or board 20 produced in the production plant. Any excess waste paper and waste board unfit for the process can be used as fuel in the production 2 of energy.

In the deinking plant 3, the waste paper 10 is pulped and deinked. A reject is separated in the pulping process and a fibre-, chemical- and filler-containing waste sludge 4 is produced in the deinking process, said reject and sludge being thickened to a dry solids content of about 50 % and passed to the production 2 of energy to serve as fuel. The deinked recycled pulp 11 is passed to the manufacture 5 of paper or board.

The paper mill can also operate without a deinking plant or the deinking plant may be passed (arrow 12), for example, when brown paper and board grades or so-called gray paper are manufactured in which printing ink residues are accepted.

Of good quality waste paper, it is possible to manufacture even 100 % recycled fibre paper. However, it is often necessary to replace some of the recycled fibres with a reinforcement pulp improving the strength of paper, which pulp has conventionally been chemical woodpulp. The proportion of the reinforcement pulp may be, depending on the paper grade, 5 to 20 % of the fibre raw material of paper.

The production plant 50 shown in Fig. 1 takes at least part of its fresh water need from the waste water treatment plant 15 of the residential community as purified waste water 14. Waste water 16 discharged from the modern treatment plant 15 applying mechanical, chemical and biological processing and treatment methods is relatively clean as compared with raw water taken from water bodies. In the production plant 50, this purified waste water 14 is further circulated through the mill's own fresh water treatment, in which it is purified so as to be suitable for the process requirements. For example, reverse osmosis may be used as a purification method in the treatment of fresh water.

The fresh water need of the production plant 50 may be further diminished by cleaning part of the water required in the processes by distillation of waste water utilizing waste heat from the power plant. The water to be distilled may be purified waste water 14 from the community or circulation water from the production processes.

Waste waters 17 generated in the production plant 50 can be advantageously passed to the waste water treatment plant 15 of the residential community in order to be cleaned together with waste waters 18 from the residential community. The warm waste waters 17 coming from the paper mill raise the temperature of water at the treatment plant 15, which is beneficial in several stages of the biological and chemical water treatment. As a result of this all, the purification result of the waste water treatment plant 15 of the community improves, which allows the purified waste water 16 to be passed again to the paper mill processes. Alternatively, the waste waters from the mill can be distilled by the waste heat from the power plant, thereby allowing the amount of discharge waters to be passed from the process to the surrounding system and, on the other hand, the amount of make-up water, or fresh water, of the mill to be limited.

More synergy advantage is achieved by placing in connection with the production plant or in its immediate vicinity a paper or board converting plant 19, which converts a significant part of the output 20 of the mill into finished products 21 for consumers. Depending on the line of production of the production plant 50, the plant in question may be, for example, a printing plant or a plant manufacturing packages. The converting plant 19 receives energy 22 required by it in production from the energy production unit 2 of the production plant.

Fig. 2 shows a production arrangement which produces about 100,000 t/a of board 20 used as raw material for corrugated board boxes as well as a considerable amount of energy 8 intended for sale, i.e. about 80 GWh/a of electricity and 280 GWh/a of district heat. As raw material, the production plant uses about 50,000 t/a of used corrugated board boxes and 30,000 t/a of mixed waste paper 10 as well as about 200,000 t/a of REF, or sorted combustible waste 1. The waste typically comes from commerce and industry but may also contain sorted combustible waste derived from households. The waste is mainly dry and it has been crushed in separate REF stations into a size in which the pieces have a maximum diameter less than 50 mm. The composition of REF is, for example, about 40 % of wood, 40 % of paper or board and 20 % of plastics. In practice, the proportion of the fibre fraction varies between 30 and 55 % depending on the origin and the mode of sorting of the waste.

The REF fraction 1 is separated as dry into two components, i.e. a fraction 31, which is rich in wood and which is passed directly to a gasifier 32, and a plastic-and paper-containing fraction 33. Screening 30 may be based, for example, on the size of pieces or on the utilization of an air flow and gravity, and it may be carried out, for example, by means of a device known as a wind sieve. The plastic- and paper-containing fraction 33 is pulped together with the waste paper and waste board fractions 10. In connection with pulping 34, plastics and other impurities are separated as a reject 36 from a fibre-containing fraction 35. Depending on the quality of the REF fraction 1 and on the type of dry screening 30, the material stream 31 passing from the dry screening process 30 to the gasifier 32 may also contain a lot of plastics, in which case the fraction 33 to be passed to a pulper 34 will be particularly rich in paper.

From the pulping station 34 the accept 35 is passed further to cleaning stages 37, which may include removal of sand, fine screening and, when needed, fractionation. The purpose of these process stages 37 is to separate fibre fractions 38 of the highest quality for use in the manufacture 39 of board. The potential of the fractionated raw material can best be utilized if the board product is manufactured so as to have a layered structure.

Fractions 40 of poorer quality separated from pulp in fine screening and fractionating are passed together with the reject 36 from the pulping station 34 to a sludge press 41, in which the dry matter content of this water-containing material is increased, preferably over 50 %. A material stream 42 as thus processed is passed further to the gasifier 32. The gasifier unit 32 is provided with a cleaning technology according to the quality of the waste to be gasified and the desired purity level of product gas. Typically, cyclones, bag filters or ceramic filters are used as solids separators. The chlorine contained in the REF may be mainly removed by means of a solids filter after chlorine has reacted to form a solid salt.

Part of product gas 43 obtained from the gasifier 32 is passed directly to the paper machine 39 for use in the drying of board, which may be accomplished, for example, as impingement drying. A dryer section suitable for this purpose is described, for example, in Finnish patent application FI 971187.

The bulk of product gas 44 obtained from the gasifier 32 is passed to a power plant 45, which is thereby capable of producing in a profitable manner all electrical energy 7 needed in the production plant and, in addition, a considerable amount of energy 8 for sale.

The amount of ash 9 generated in the process is about 30,000 t/a. The sensible applications of this fraction may include, for example, the use as a road-bed, in the cement industry or even as a paper filler after a certain further processing. When the gasification reactor is supplied with only paper-based fuels, its ash is particularly suitable for recycling.

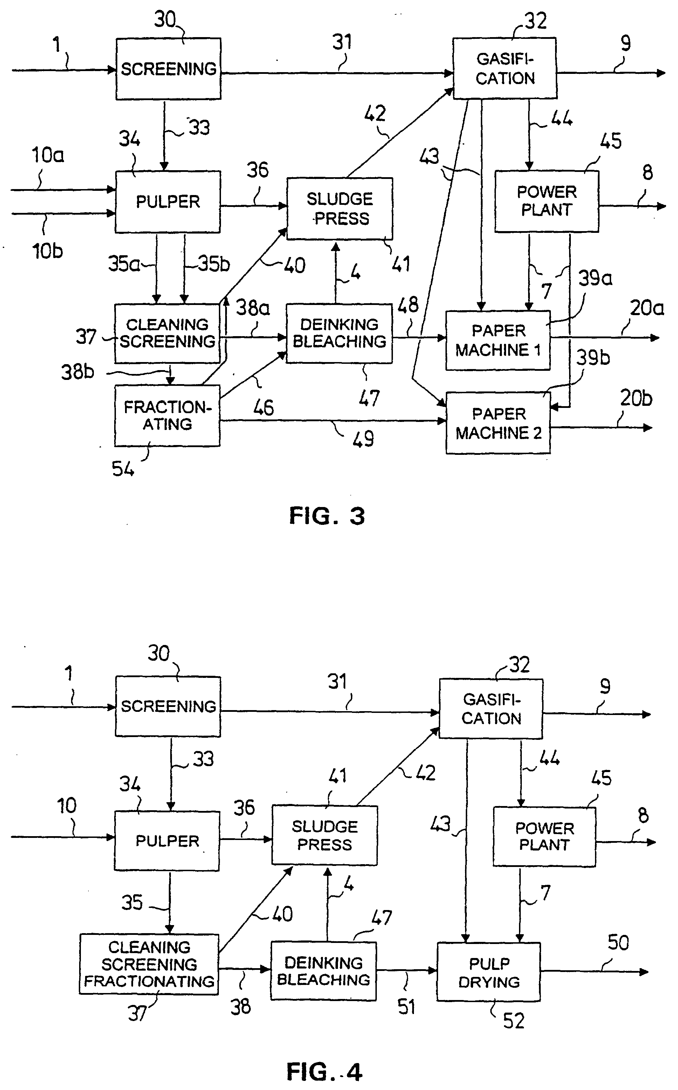

Fig. 3 depicts a two-line production plant which produces about 100,000 t/a of board 20b used as raw material for corrugated board boxes, 100,000 t/a of newsprint 20a as well as a considerable amount of energy 8 for sale, i.e. about 160 GWh/a of electricity and 560 GWh/a of district heat. As raw material, the production plant uses about 80,000 t/a of used newsprint and magazine paper 10a, about 50,000 t/a of used corrugated board boxes and 30,000 t/a mixed waste paper 10b as well as about 400,000 t/a of REF, i.e. sorted combustible waste 1.

The treatment of the REF fraction 1 largely corresponds to the above description in connection with Fig. 2. The REF fraction 1 is separated as dry into two components, i.e. a fraction 31 which is rich in wood and which is passed directly to a gasifier 32, and a plastic- and paper-containing fraction 33 which is pulped together with the mixed waste paper and board fractions 10b. In the pulping station 34, plastics and other impurities are separated as a reject 36, which is passed through a sludge press 41 to the gasifier 32.

The accepts from the pulping stations 34, i. e. pulped newsprint and magazine paper 35a as well as pulped mixed waste paper, board and a REF-derived fraction 35b are passed further to cleaning stages 37, which include sand removal and fine screening. From the cleaning stage 37, pulp 38b pulped from board, mixed waste paper and the REF-containing fraction is passed further to fractionation 54. Fractions 38a and 46 suitable for the manufacture of newsprint are passed from the fine screening 37 and from the fractionation 54 to deinking and bleaching stages 47, from which they are passed further to a newsprint machine 39a to serve as fibre raw material 48. A waste sludge 4 is produced at the deinking stage 47, which sludge is passed through the sludge press 41 to the gasification 32.

Fractions 49 suitable for the manufacture of board are passed from the fractionation 54 to a board machine 39b. The purpose of the cleaning, screening and fractionating stages 37,54 is to separate suitable fibre fractions 38a,46,49 for use in the manufacture of board 20b and newsprint 20a in an optimal manner. The potential of the raw material of fractions suitable for board can best be utilized if the board product is manufactured so as to have a layered structure.

Fractions 40 of poorer quality separated from pulp in the fine screening 37 and in the fractionation 54 are passed together with the reject 36 from the pulping station and a deinking sludge 4 to the sludge press 41, in which attempts are made to increase the dry matter of this material to as high a level as possible, preferably over 50 %. A material stream 42 thickened by means of the sludge press 41 is passed further to the gasifier 32.

Part of the gas 43 which is produced by the gasifier 32 and appropriately cleaned is passed directly to the paper machines 39a and 39b for use in the drying of newsprint and board, which may be accomplished, for example, as impingement drying.

The bulk of the gas 44 obtained from the gasifier 32 is passed to a power plant 45, which is thereby capable of generating in a profitable manner all the electrical energy 7 required by the system as well as a considerable amount of energy 8 for sale.

In summary of the examples of Figs. 2 and 3, it may be stated that the concepts described very efficiently utilize the material in the recycling stream, on the one hand, as fibre raw material in the manufacture of recycled products and, on the other hand, as fuel in the production of energy. The concept is simultaneously clearly a net producer of energy. The raw material used both for the production of energy and for the manufacture of paper and/or board is very inexpensive in the concept.

Fig. 4 shows a production arrangement by means of which about 100,000 t/a of deinked market pulp 50 manufactured from waste paper and a considerable amount of energy 8 for sale, i.e. about 80 GWh/a of electricity and 280 GWh/a of district heat, are produced. The production plant uses as raw material about 80,000 t/a of office waste paper 10 and about 200,000 t/a of REF, i.e. sorted combustible waste.

The REF fraction is sorted as dry into two components, i.e. a fraction 31, which is rich in wood and which is passed directly to a gasifier 32, and a plastic- and paper-containing fraction 33, which is passed to a pulping station 34 in order to be processed together with the waste paper fraction 10. In connection with pulping, plastics and other impurities 36 are separated from the pulp.

An accept 35 from the pulping station is passed further to cleaning stages 37, which include sand removal, fine screening and, when needed, fractionation. The purpose of these process stages is to separate fibre fractions 38 of the highest quality so as to be passed further to deinking and bleaching stages 47, from which pulp 51 is passed onwards to a drying machine 52.

Fractions 40 of poorer quality separated from pulp in fine screening and fractionating 37 are passed together with a reject 36 generated in the pulping 34 and a deinking sludge 4 to a sludge press 41 in order to be thickened and from there a pulp stream 42 is passed further to the gasifier 32.

Part of the product gas 43 which is obtained from the gasifier 32 and appropriately cleaned is passed directly for use in the drying 52 of pulp, which is advantageously accomplished as air drying.

The remainder of the gas 44 produced by the gasifier 32 is passed to a power plant 45, which is thereby capable of producing all the electrical energy 7 required in the system in a profitable manner as well as a considerable amount of energy 8 for sale.

The concepts described in connection with Figs. 2―4 provide significant benefits as compared with conventional mass incineration of mixed waste and with conventional papermaking. The concept utilizes efficiently the material in the recycling stream, on the one hand, as recycled products and, on the other, as fuel. This results in a higher paper recycling degree, a higher production of electricity and a less expensive overall investment. The material recycling of wastes is made more efficient and the profitability of energy production is improved as compared with conventional systems.

The utilization of the fibre material in waste streams is enhanced substantially with the proposed concept. In the current situation, the amount of fibres ending up in landfills is so high that the reduction of its proportion offers a profitable alternative for the acquisition of raw material for papermaking.

In the following, the significance of the invention will be discussed further from the standpoint of the waste management and energy production of the community in the form of an exemplifying calculation.

A community of 3 million inhabitants consumes about 135,000 t/a of newsprint and about 200,000 t/a of corrugated board. The same community produces about 360.000 t/a of combustible wood and plastics waste. Assuming that source separation can be arranged efficiently, i.e. about 85 % of the waste can be brought to the sphere of separation, and taking further the yield of the deinking process (about 85 %) into account, a production plant utilizing the waste stream can be designed to produce about 100,000 t/a of newsprint, in which 90 % of the raw material is deinked waste paper, and 140,000 t/a of liner/fluting, the raw material of which is 100 % waste board. In this case, the power output from the energy production utilizing source-separated recovered fuel (REF) is about 210 MW, from which about 80 MW of electric power and 115 MW of heat power are obtained. If the same amount of waste were burnt as unsorted in a conventional incineration plant intended only for burning of waste, only 30 MW of electricity would be obtained.

When accomplished in the scale described above, the arrangement according to the invention would reduce the amount of waste ending up in a landfill or in mass incineration by about 440,000 tonnes, or by about 25 %. This is based on enhanced recycling of paper (the degree of recycling today is about 60 %) and on the use of source-separated wood and plastics waste as REF. When the waste processing costs are assumed to amount to about 100 USD per tonne, the saving potential of the community in respect of the waste processing costs will be about 44 million USD per annum.

The production plant in accordance with the example may be assumed to achieve considerable economic benefits, such as:
― inexpensive raw material both in the manufacture of paper and in the production of energy;
― sales proceeds from the electrical energy and heat in excess of the consumption of the paper mill;
― savings in storage and transport costs;
― savings in waste management costs when part of the process waste is used at the mill;
― other process synergies.

All in all, the effect of these advantages on profitability can be over 10 % of the turnover in the case of this example.

The claims are presented in the following and the various details of the invention may vary within the inventive idea defined by said claims and differ from the disclosure given above by way of example only.

## Claims

1. A method of arranging the raw material, energy and waste management of a production plant manufacturing pulp and/or paper and/or board from recycled fibres, which plant receives and processes two separate streams (1,10) of waste material produced by a residential community, both of which are presorted and/or separately collected so that the first stream (1) of waste material mainly contains combustible waste to be used as fuel in the production of energy required by the production plant and the second stream (10) of waste material mainly contains waste paper and/or board to be used as fibre raw material of the production plant to a considerable extent, said second stream (10) being passed to a pulping stage (34), to a cleaning and screening stage (37) and to a fibre processing line comprising one or more of the stages of fractionating (54), deinking, bleaching (47), pulp drying (52) and papermaking (39), and rejects (36,40,4) from at least one of the fibre processing stages (34,37,47) are used as fuel in the production of energy, **characterized in that** the first stream (1) of waste material is first passed to a screening stage (30) in which a residual paper- and board-rich fraction (33) is separated from it to be passed to the pulping stage (34) where it is processed either together with the second stream (10) of waste material or separately from it to be used as fibre raw material in the manufacture of pulp, paper or board and a residual fraction (31) from the screening stage is used as fuel in the production of energy.

2. A method as claimed in claim 1, **characterized in that** waste fractions containing raw material and energy and produced as by-products in the production processes of the production plant, such as rejects and sludges (4,6,36,40) produced in the fibre processing stages pulping(34), cleaning and screening (37), deinking, bleaching (47), ash (9,9b) produced in the combustion of waste, and warm waste waters (17)are utilized within the production plant either as raw material or as energy to a considerable extent, or said fractions are separated such that they can at least principally be used in a further process or another type of useful use outside the production plant.

3. A method as claimed in claim 1 or 2, **characterized in that** wastes generated in the manufacture of pulp, paper and/or board, such as, a reject (36) separated in pulping (34), a fibre fraction (40) of poor quality and a waste sludge (4) generated in deinking (47), are passed to the production of energy to serve as fuel.

4. A method as claimed in any one of claims 1 to 3, **characterized in that** the waste fractions (31,42) used as fuel are gasified and the thus obtained gas (44) is used in a coal, natural gas or oil fired power plant as secondary fuel.

5. A method as claimed in any one of claims 1 to 3, **characterized in that** the waste fractions (31,42) used as fuel are gasified and the thus obtained gas (44) is used as fuel in a gas turbine.

6. A method as claimed in claim 4 or 5, **characterized in that** combustible gas (43) produced by gasifying the waste fractions (31,42) is used for producing hot drying air for the hot-air drying of pulp, paper or board.

7. A method as claimed in claim 6, **characterized in that** the drying of pulp, paper or board is accomplished solely as hot-air drying without any drying stages that require the use of steam.

8. A method as claimed in any one of the preceding claims, **characterized in that** ash (9) produced in the production (2) of energy is used as filler in the manufacture (5) of paper or board.

9. A method as claimed in claim 8, **characterized in that** the ash (9) used as filler in the manufacture of paper or board is produced by burning or by gasifying a sorted waste paper fraction in a separate combustion boiler or gasification reactor intended for this use.

10. A method as claimed in claim 8, **characterized in that** the ash (9) used as filler in the manufacture of paper or board is produced from ash from a combustion boiler or a gasification reactor by means of after-incineration or another bleaching process.

11. A method as claimed in claim 8, **characterized in that** the best quality fraction (9) of the ash produced in the production (2) of energy is used in the manufacture of paper or board and other ash fractions (9b) are utilized in other ways, for example, in connection with the manufacture of cement, earthwork, and the like.

12. A method as claimed in any one of the preceding claims, **characterized in that** ash produced in the production of energy is used on flue gas scrubbers of power plants for cleaning flue gases.

13. A method as claimed in any one of the preceding claims, **characterized in that** paper or board is manufactured by means of multi-layer web forming, in which connection pulp produced from different waste paper fractions is used for different layers of paper or board.

14. A method as claimed in any one of the preceding claims, **characterized in that** paper and/or board is/are manufactured on two or more manufacturing lines, using different types of waste paper fractions as fibre raw material.

15. A method as claimed in claim 14, **characterized in that** fibre waste and/or circulation water from one manufacturing line is/are passed to another manufacturing line.

16. A method as claimed in any one of the preceding claims, **characterized in that** at least part of the fresh water need of the production plant is taken from a waste water treatment plant (15) of the residential community as purified waste water (14), which is passed for use through a fresh water treatment system of the produc-tion plant.

17. A method as claimed in claim 16, **characterized in that** the waste waters are purified by distillation utilizing waste heats generated in the production of energy and the thus distilled water is used in the production processes to replace some of fresh water.

18. A method as claimed in claim 17, **characterized in that** distillation is used for purifying the production plant's own waste waters for recycling or for reducing the waste water load of the residential community.

19. A method as claimed in any one of the preceding claims, **characterized in that** waste waters (17) generated in the production plant are passed to the waste water treatment plant (15) of the residential community for purification.

20. A production plant for manufacturing of pulp and/or paper and/or board, which plant is arranged to use waste materials (1,10) as fibre raw material and as fuel and which plant comprises equipment for processing two presorted and/or separately collected streams (1,10) of waste material obtained from an adjacent residential community, the first stream (1) mainly containing combustible waste and the second stream (10) mainly containing waste paper and/or board, which equipment comprise devices (32,45) for utilizing the first stream (1) of waste material as fuel in the production of energy for the production plant's own requirements, devices (34,37) for pulping, cleaning and screening the second stream (10) of waste material as well as a fibre processing line comprising one or more devices for fractionating (54), deinking, bleaching (47), pulp drying (52) and papermaking (39), **characterized in that** the devices for processing the first stream (1) of waste material further comprise a separating device (30) to which the first stream (1) of waste material is first passed for separating a paper- and board-rich fraction (33) from the combustible waste, said paper- and board-rich fraction (33) being passed to the pulping, cleaning and screening devices (34, 37) provided for processing the second stream (10) of waste material.

21. A production plant as claimed in claim 20, **characterized in that** it comprises provisions for utilizing waste fractions (4,6,9,36,40) produced as by-products and containing raw material and energy or, alternatively, for passing such waste fractions (9b,17) to useful use outside the production plant, said waste fractions including e.g. rejects and sludges (4,6,36,40) from pulping, cleaning, screening, fractionating, papermaking and/or deinking devices, ash (9,9b) produced in the production of energy, and warm waste waters (17).

22. A production plant as claimed in claim 20, **characterized in that** the production plant comprises at least two paper or board manufacturing lines which are arranged to manufacture paper or board grades which are different from each other, in which connection different waste paper fractions can be utilized efficiently.

23. A production plant as claimed in any one of claims 20 to 22, **characterized in that** the equipment for the manufacture of paper and/or board include a paper or board machine provided with a multi-layer web former, owing to which different waste paper fractions can be efficiently utilized as raw materials in different layers of paper and/or board.

24. A production plant as claimed in any one of claims 20 to 22, **characterized in that** the energy production unit includes a gasification reactor (32), which is arranged to gasify combustible waste fractions (31,42) into product gases (44), which are arranged to be burnt in a combustion boiler or a gas turbine (45).

25. A production plant as claimed in claim 24, **characterized in that** the equipment for the manufacture of pulp and/or paper and/or board include hot-air drying devices, such as, infrared dryers, impingement dryers, airborne web-dryers or other equivalent devices, and they are arranged to use purified product gas (43) produced by the gasification reactor (32) for the generation of hot drying air.

26. A production plant as claimed in claim 25, **characterized in that** the drying of pulp, paper or board is accomplished solely by means of hot-air drying devices without any drying stages based on the use of steam.

27. A production plant as claimed in claim 20, **characterized in that** part of the ash produced as a by-product in the production (2) of energy is arranged to be used as filler (9) in paper or board in the papermaking process (5).

28. A production plant as claimed in claim 27, **characterized in that** the energy production unit includes a separate combustion boiler or gasification reactor, which is arranged to burn only a sorted waste paper fraction, the ash produced from said fraction being arranged to be passed to the papermaking process to serve as filler (9) in paper or board.

29. A production plant as claimed in claim 27 or 28, **characterized in that** it comprises devices for after-incineration of the ash generated as a by-product in the production (2) of energy or for bleaching it in another way before it is used as filler (9) in paper or board.

30. A production plant as claimed in claim 20, **characterized in that** it comprises devices for using purified waste water (14) derived from a waste water treatment plant (15) of the residential community as fresh water in the production processes.

31. A production plant as claimed in claim 30, **characterized in that** it comprises devices for purifying waste or circulation waters by distillation utilizing the waste heat produced by the processes.

32. A production plant as claimed in any one of claims 20 to 31, **characterized in that** waste waters (17) from the production plant (50) are passed to the waste water treatment plant (15) of the residential community.

33. A production plant as claimed in claim 20, **characterized in that** a paper or board converting plant (19) is integrated into its immediate vicinity, which plant is capable of converting a considerable part of the paper and/or board output of the production plant (50).

## Patentansprüche

1. Verfahren zur Anordnung des Rohmaterials, der Energie, und Abfallmanagement einer Produktionsanlage, die Zellstoff und/oder Papier und/oder Karton aus wiedergewonnenen Fasern fertigt, wobei die Anlage zwei getrennte Ströme (1, 10) von Abfallmaterial erzeugt von einer Wohngemeinde erhält und verarbeitet, wobei beide vorsortiert und/oder getrennt gesammelt werden, so dass der erste Strom (1) des Abfallmaterials hauptsächlich brennbaren Abfall enthält, verwendbar als ein Brennstoff bei der Erzeugung von für die Produktionsanlage erforderlicher Energie, und der zweite Strom (10) des Abfallmaterials hauptsächlich Abfallpapier und/oder Karton enthält, in einem beträchtlichen Ausmaß verwendbar als ein Faserrohmaterial der Produktionsanlage, wobei der zweite Strom zu einem Aufschlussstadium (34), einem Säuberungs- und Siebstadium (37) und zu einer Faserverarbeitungslinie geführt wird, mit einem oder mehreren Stadien des Fraktionierens (54), des Tintenentfernens, des Bleichens (47), des Zellstofftrocknens (52) und des Papiererzeugens (39), und Ausschuss (36, 40, 4) von wenigstens einem der Faserverarbeitungsstadien (34, 37, 47) als ein Brennstoff in der Erzeugung von Energie verwendet wird, **dadurch gekennzeichnet, dass** der erste Strom (1) des Abfallmaterials zunächst zu einem Siebstadium (30) geführt wird, in welchem eine papier- und kartonreiche Fraktion (33) davon abgetrennt wird, um zu dem Aufschlussstadium (34) geführt zu werden, wo es entweder zusammen mit dem zweiten Strom (10) des Abfallmaterials oder getrennt davon verarbeitet wird, um als ein Faserrohmaterial bei der Fertigung von Zellstoff, Papier oder Karton verwendet zu werden, und eine Rückstandsfraktion (31) aus dem Siebstadium als Brennstoff in der Energieerzeugung verwendet wird.

2. Verfahren nach Anspruch 1, **dadurch gekennzeichnet, dass** Abfallfraktionen, die Rohmaterial und Energie enthalten und als Nebenprodukte in den Produktionsverfahren der Produktionsanlage produziert werden, wie etwa Ausschuss und Schlämme (4, 6, 36, 40) produziert in den Faserverarbeitungsstadien Aufschluss (34), Reinigen und Sieben (37), Tintenentfernen, Bleichen (47), bei der Verbrennung von Abfall erzeugte Asche (9, 9b), und warmes Abfallwasser (17), innerhalb der Produktionsanlage entweder als ein Rohmaterial oder als Energie in einem beträchtlichen Umfang verwendet werden, oder diese Fraktionen derartig getrennt werden, dass sie wenigstens prinzipiell in einem weiteren Verfahren oder in einer anderen Art von nützlicher Verwendung außerhalb der Produktionsanlage verwendet werden können.

3. Verfahren nach Anspruch 1 oder 2, **dadurch gekennzeichnet, dass** bei der Fertigung von Zellstoff, Papier und/oder Karton erzeugte Abfälle, wie etwa ein beim Aufschluss (34) abgetrennter Ausschuss (36), eine Faserfraktion (40) von schlechter Qualität und ein beim Tintenentfernen (47) erzeugter Abfallschlamm (4), der Energieerzeugung zugeführt werden, um als ein Brennstoff zu dienen.

4. Verfahren nach einem der Ansprüche 1 bis 3, **dadurch gekennzeichnet, dass** die als Brennstoff verwendeten Abfallfraktionen (31, 42) vergast werden, und das so erhaltene Gas (44) in einem Kohle-, Naturgas- oder Ölgefeuerten Kraftwerk als ein sekundärer Brennstoff verwendet wird.

5. Verfahren nach einem der Ansprüche 1 bis 3, **dadurch gekennzeichnet, dass** die als ein Brennstoff verwendeten Abfallfraktionen (31, 42), vergast werden und das so erhaltene Gas (44) als ein Brennstoff in einer Gasturbine verwendet wird.

6. Verfahren nach Anspruch 4 oder 5, **dadurch gekennzeichnet, dass** brennbares Gas (43) erzeugt durch Vergasen der Abfallfraktionen (31, 42) zur Erzeugung von warmer Trocknungsluft für das Warmlufttrocknen von Zellstoff, Papier oder Karton verwendet wird.

7. Verfahren nach Anspruch 6, **dadurch gekennzeichnet, dass** das Trocknen von Zellstoff, Papier oder Karton allein als Warmlufttrocknen ohne Trockenstadien, welche die Verwendung von Dampf erfordern, ausgeführt wird.

8. Verfahren nach einem der vorhergehenden Ansprüche, **dadurch gekennzeichnet, dass** bei der Energieerzeugung (2) erzeugte Asche (9) als ein Füllstoff bei der Fertigung (5) von Papier oder Karton verwendet wird.

9. Verfahren nach Anspruch 8, **dadurch gekennzeichnet, dass** die als ein Füllstoff bei der Fertigung von Papier oder Karton verwendete Asche (9) durch Verbrennen oder Vergasen einer sortierten Abfallpapierfraktion in einem für diese Verwendung geeigneten, getrennten Verbrennungskessel oder Vergasungsreaktor erzeugt wird.

10. Verfahren nach Anspruch 8, **dadurch gekennzeichnet, dass** die bei der Fertigung von Papier oder Karton als ein Füllstoff verwendete Asche (9), aus Asche aus einem Verbrennungskessel oder einem Vergasungsreaktor mittels einer Nachveraschung oder einem anderen Bleichverfahren erzeugt wird.

11. Verfahren nach Anspruch 8, **dadurch gekennzeichnet, dass** die Fraktion mit der besten Qualität (9) der bei der Energieerzeugung (2) erzeugten Asche bei der Fertigung von Papier oder Karton verwendet wird, und andere Aschefraktionen (9b) auf andere Weise genutzt werden, zum Beispiel in der Verbindung mit der Fertigung von Zement, bei Erdarbeiten und ähnlichem.

12. Verfahren nach einem der vorhergehenden Ansprüche, **dadurch gekennzeichnet, dass** die bei der Energieerzeugung erzeugte Asche in Abgaswaschvorrichtung von Kraftwerken oder zur Reinigung von Abgasen verwendet wird.

13. Verfahren nach einem der vorhergehenden Ansprüche, **dadurch gekennzeichnet, dass** Papier oder Karton mittels Bildung mehrschichtiger Bahnen hergestellt wird, wobei in diesem Zusammenhang aus verschiedenen Abfallpapierfraktionen erzeugter Zellstoff für verschiedene Schichten des Papiers oder des Kartons verwendet wird.

14. Verfahren nach einem der vorhergehenden Ansprüche, **dadurch gekennzeichnet, dass** Papier und/oder Karton auf zwei oder mehreren Fertigungslinien unter Verwendung von verschiedenen Arten von Abfallpapierfraktionen als Faserrohmaterial hergestellt wird/werden.

15. Verfahren nach Anspruch 14, **dadurch gekennzeichnet, dass** Faserabfall und/oder Umlaufwasser aus einer Fertigungslinie zu einer anderen Fertigungslinie geführt wird/werden.

16. Verfahren nach einem der vorhergehenden Ansprüche, **dadurch gekennzeichnet, dass** wenigstens ein Teil des Frischwasserbedarfs der Produktionsanlage aus einer Abfallwasserbehandlungsanlage (15) einer Wohngemeinde als gereinigtes Abwasser (14) entnommen wird, welches für die Verwendung durch ein Frischwasserbehandlungssystem der Produktionsanlage geführt wird.

17. Verfahren nach Anspruch 16, **dadurch gekennzeichnet, dass** die Abfallwässer durch Destillation unter Nutzung von bei der Energieerzeugung erzeugter Abwärme gereinigt werden, und das derartig destillierte Wasser in den Produktionsvorgängen verwendet wird, um etwas Frischwasser zu ersetzen.

18. Verfahren nach Anspruch 17, **dadurch gekennzeichnet, dass** Destillation für die Reinigung des Abwassers der Produktionsanlage, zum Recycling oder zur Reduktion der Abwasserbelastung der Wohngemeinde verwendet wird.

19. Verfahren nach einem der vorhergehenden Ansprüche, **dadurch gekennzeichnet, dass** in der Produktionsanlage erzeugte Abwässer (17), zur Reinigung zu der Abwasserbehandlungsanlage (15) der Wohngemeinde geführt werden.

20. Produktionsanlage zur Fertigung von Zellstoff und/oder Papier und/oder Karton, wobei die Anlage angeordnet ist, um Abfallmaterialien (1, 10) als ein Faserrohmaterial und als Brennstoff zu verwenden, und wobei die Anlage eine Ausrüstung zur Verarbeitung von zwei vorsortierten und/oder getrennt gesammelten Strömen (1, 10) von Abfallmaterial erhalten von einer naheliegenden Wohngemeinde umfasst, wobei der erste Strom (1) hauptsächlich brennbaren Abfall und der zweite Strom (10) hauptsächlich Abfallpapier und/oder -karton enthält, wobei die Ausrüstung Vorrichtungen (32, 45) umfasst zur Nutzung des ersten Stromes (1) des Abfallmaterials als Brennstoff in der Energieerzeugung für die eigenen Bedürfnisse der Produktionsanlage, Vorrichtungen (34, 37) zum Aufschluss, Reinigen und Sieben des zweiten Stromes (10) des Abfallmaterials, als auch eine Faserverarbeitungslinie mit einer oder mehreren Vorrichtungen zum Fraktionieren (54), Tintenentfernen, Bleichen (47), Zellstofftrocken (52) und Papiererzeugung (39), **dadurch gekennzeichnet, dass** die Vorrichtungen zur Verarbeitung des ersten Stromes (1) des Abfallmaterials ferner eine Trennvorrichtung (30) umfassen, zu welcher der erste Strom (1) des Abfallmaterials zuerst geführt wird, um eine papier- und kartonreiche Fraktion (33) von dem brennbaren Abfall zu trennen, wobei die papier- und kartonreiche Fraktion (33) zu den Aufschluss-, Reinigungs- und Siebvorrichtungen (34, 37), vorgesehen zur Verarbeitung des zweiten Stromes (10) des Abfallmaterials, geführt wird.

21. Produktionsanlage nach Anspruch 20, **dadurch gekennzeichnet, dass** sie Vorkehrungen zur Nutzung von als Nebenprodukte erzeugten Abfallfraktionen (4, 6, 9, 36, 40), und welche Rohmaterial und Energie enthalten, oder alternativ zur Führung derartiger Abfallfraktionen (9b, 17) zu einer nützlichen Verwendung außerhalb der Produktionsanlage, umfasst, wobei die Abfallfraktionen zum Beispiel Ausschuss und Schlämme (4, 6, 36, 40) aus Aufschluss-, Sieb-, Fraktionierungs-, Papiererzeugungsund/oder Tintenentfernungsvorrichtungen, Asche (9, 9b), erzeugt bei der Energieerzeugung, und warme Abwässer (17) enthalten.

22. Produktionsanlage nach Anspruch 20, **dadurch gekennzeichnet, dass** die Produktionsanlage wenigstens zwei Papier- oder Kartonfertigungslinien umfasst, welche angeordnet sind um Papier- oder Kartonklassen herzustellen, welche unterschiedlich voneinander sind, wobei in diesem Zusammenhang verschiedene Abfallpapierfraktionen wirksam genutzt werden können.

23. Produktionsanlage nach einem der Ansprüche 20 bis 22, **dadurch gekennzeichnet, dass** die Ausrüstung für die Fertigung von Papier und/oder Karton eine Papier- oder Kartonmaschine versehen mit einem Bildner mehrschichtiger Bahnen enthält, aufgrund deren verschiedene Abfallpapierfraktionen wirksam als Rohmaterialien in verschiedenen Schichten von Papier und/oder Karton genutzt werden können.

24. Produktionsanlage nach einem der Ansprüche 20 bis 22, **dadurch gekennzeichnet, dass** die Energieerzeugungseinheit einen Vergasungsreaktor (32) enthält, welcher geeignet ist, um brennbare Abfallfraktionen (31, 42) in Produktgase (44) zu vergasen, welche geeignet sind, um in einem Verbrennungskessel oder einer Gasturbine (45) verbrannt zu werden.

25. Produktionsanlage nach Anspruch 24, **dadurch gekennzeichnet, dass** die Ausrüstung zur Fertigung von Zellstoff und/oder Papier und/oder Karton Warmlufttrockenvorrichtungen, wie etwa Infrarottrockner, Pralltrockner, Luftnetztrockner oder andere äquivalente Vorrichtungen enthalten, und sie geeignet sind, um durch den Vergasungsreaktor (32) erzeugtes, gereinigtes Produktgas (43) für die Erzeugung von warmer Trocknungsluft zu nutzen.

26. Produktionsanlage nach Anspruch 25, **dadurch gekennzeichnet, dass** das Trocknen von Zellstoff, Papier oder Karton lediglich mittels Warmluftrockenvorrichtungen ohne auf der Verwendung von Dampf basierende Trockenstadien ausgeführt wird.

27. Produktionsanlage nach Anspruch 20, **dadurch gekennzeichnet, dass** ein Teil der als ein Nebenprodukt in der Energieerzeugung (2) erzeugten Asche geeignet ist, um als ein Füllstoff (9) in Papier oder Karton im Papiererzeugungsvorgang (5) verwendet zu werden.

28. Produktionsanlage nach Anspruch 27, **dadurch gekennzeichnet, dass** die Energieerzeugungseinheit einen getrennten Verbrennungskessel oder Vergasungsreaktor enthält, welcher geeignet ist, um nur eine sortierte Abfallpapierfraktion zu verbrennen, wobei die aus dieser Fraktion erzeugte Asche geeignet ist, um zu dem Papiererzeugungsvorgang geführt zu werden, um als ein Füllstoff (9) in Papier oder Karton zu dienen.

29. Produktionsanlage nach Anspruch 27 oder 28, **dadurch gekennzeichnet, dass** sie Vorrichtungen für die Nachveraschung von als ein Nebenprodukt bei der Energieerzeugung (2) erzeugter Asche, oder um sie auf andere Weise zu bleichen, umfasst, bevor sie als Füllstoff (9) in Papier oder Karton verwendet wird.

30. Produktionsanlage nach Anspruch 20, **dadurch gekennzeichnet, dass** sie Vorrichtungen zur Verwendung aus einer Abwasserbehandlungsanlage (15) abgeleitetem, gereinigtem Abwasser (14) einer Wohngemeinde als Frischwasser in den Produktionsvorgängen umfasst.

31. Produktionsanlage nach Anspruch 30, **dadurch gekennzeichnet, dass** sie Vorrichtungen, zur Reinigung von Abfall- oder Umlaufwasser durch Destillation oder Nutzung der bei den Vorgängen erzeugten Abwärme umfasst.

32. Produktionsanlage nach einem der Ansprüche 20 bis 31, **dadurch gekennzeichnet, dass** Abwässer (17) aus der Produktionsanlage (50) zu der Abwasserbehandlungsanlage (15) der Wohngemeinde geführt werden.

33. Produktionsanlage nach Anspruch 20, **dadurch gekennzeichnet, dass** eine Papier- oder Kartonverarbeitungsanlage (19) in ihrer unmittelbaren Nähe integriert wird, wobei die Anlage einen beträchtlichen Teil des Papier- und/oder Kartonausstoßes der Produktionsanlage (50) verarbeiten kann.

## Revendications

1. Procédé pour agencer la gestion de matière première, énergie et déchets d'une usine de production fabricant de la pâte et/ou du papier et/ou carton à partir de fibres recyclées, laquelle usine reçoit et traite deux courants séparés (1, 10) de déchets produits par un ensemble résidentiel, dont les deux sont pré-triés et/ou ramassés séparément de telle sorte que le premier courant (1) de déchets contient principalement des déchets combustibles devant être utilisés comme carburant dans la production d'énergie nécessaire à l'usine de production et le second courant (10) de déchets contient principalement des déchets de papier et/ou carton devant être utilisés comme matière première fibreuse de l'usine de production dans une considérable mesure, ledit second courant (10) passant par une phase de mise en pâte (34), par une phase d'épuration et tri (37) et par une chaîne de traitement de fibres comprenant une ou plusieurs des phases de fractionnement (54), désencrage, blanchiment (47), séchage de pâte (52) et fabrication de papier (39), et des rejets (36, 40, 4) d'au moins une des phases de traitement de fibres (34, 37, 47) sont utilisés comme carburant dans la production d'énergie, **caractérisé en ce que** le premier courant (1) de déchets passe d'abord par une phase de tri (30) dans laquelle une fraction riche en papier et carton résiduelle (33) est séparée de celui-ci pour passer par la phase de mise en pâte (34) où elle est traitée soit ensemble avec le second courant (10) de déchets soit séparément de celui-ci pour être utilisée comme matière première fibreuse dans la fabrication de pâte, papier ou carton et une fraction résiduelle (31) provenant de la phase de tri est utilisée comme carburant dans la production d'énergie.

2. Procédé selon la revendication 1, **caractérisé en ce que** des fractions de déchets contenant de la matière première et énergie et produites comme sous-produits au cours des processus de production de l'usine de production, tels que des rejets et boues (4, 6, 36, 40) produits au cours des phases de traitement de fibres, mise en pâte (34), épuration et tri (37), désencrage, blanchiment (47), cendre (9, 9b) produite au cours de la combustion de déchets, et eaux usées chaude (17) sont utilisés dans l'usine de production soit comme matière première ou comme énergie dans une considérable mesure, soit lesdites fractions sont séparées de telle sorte qu'elles peuvent au moins principalement être utilisées dans un autre processus ou un autre type d'utilisation utile en dehors de l'usine de production.

3. Procédé selon la revendication 1 ou 2, **caractérisé en ce que** les déchets générés au cours de la fabrication de pâte, papier et/ou carton, tels que, un rejet (36) séparé au cours de la mise en pâte (34), une fraction fibreuse (40) de mauvaise qualité et une boue de déchets (4) générée au cours du désencrage (47), passent à la production d'énergie pour servir comme carburant.

4. Procédé selon l'une quelconque des revendications 1 à 3, **caractérisé en ce que** les fractions de déchets (31, 42) utilisées comme carburant sont gazéifiées et le gaz ainsi obtenu (44) est utilisé dans une centrale électrique au charbon, au gaz naturel ou au mazout comme carburant secondaire.

5. Procédé selon l'une quelconque des revendications 1 à 3, **caractérisé en ce que** les fractions de déchets (31, 42) utilisées comme carburant sont gazéifiées et le gaz ainsi obtenu (44) est utilisé comme carburant dans une turbine à gaz.

6. Procédé selon la revendication 4 ou 5, **caractérisé en ce que** le gaz combustible (43) produit en gazéifiant les fractions de déchets (31, 42) est utilisé pour produire de l'air de séchage chaud pour le séchage à l'air chaud de la pâte, du papier ou carton.

7. Procédé selon la revendication 6, **caractérisé en ce que** le séchage de la pâte, du papier ou carton est accompli uniquement comme séchage à l'air chaud sans aucune phase de séchage qui nécessite l'utilisation de vapeur d'eau.

8. Procédé selon l'une quelconque des revendications précédentes, **caractérisé en ce que** la cendre (9) produite au cours de la production (2) d'énergie est utilisée comme charge dans la fabrication (5) de papier ou carton.

9. Procédé selon la revendication 8, **caractérisé en ce que** la cendre (9) utilisée comme charge dans la fabrication de papier ou carton est produite en brûlant ou en gazéifiant une fraction de déchets de papier triés dans une chaudière à combustion ou réacteur de gazéification séparé prévu pour cette utilisation.

10. Procédé selon la revendication 8, **caractérisé en ce que** la cendre (9) utilisée comme charge dans la fabrication de papier ou carton est produite à partir de cendre provenant d'une chaudière à combustion ou réacteur de gazéification au moyen d'un processus post-incinération ou autre processus de blanchiment.

11. Procédé selon la revendication 8, **caractérisé en ce que** la fraction de meilleure qualité (9) de la cendre produite au cours de la production (2) d'énergie est utilisée dans la fabrication de papier ou carton et d'autres fractions de cendre (9b) sont utilisées d'autres manières, par exemple, en rapport avec la fabrication de ciment, terrassement, et autres choses du même genre.

12. Procédé selon l'une quelconque des revendications précédentes, **caractérisé en ce que** la cendre produite au cours de la production d'énergie est utilisée sur des dépoussiéreurs hydrauliques de centrales électriques pour nettoyer les gaz de combustion.

13. Procédé selon l'une quelconque des revendications précédentes, **caractérisé en ce que** le papier ou carton est fabriqué au moyen de formage de bande multicouche, en rapport avec lequel la pâte produite à partir de différentes fractions de déchets de papier est utilisée pour des couches différentes de papier ou carton.

14. Procédé selon l'une quelconque des revendications précédentes, **caractérisé en ce que** le papier et/ou carton est/sont fabriqués sur deux, ou plus, chaînes de fabrication, avec différents types de fractions de déchets de papier comme matière première fibreuse.

15. Procédé selon la revendication 14, **caractérisé en ce que** les déchets fibreux et/ou eau de circulation provenant d'une chaîne de fabrication passe/passent à une autre chaîne de fabrication.

16. Procédé selon l'une quelconque des revendications précédentes, **caractérisé en ce qu'**au moins une partie du besoin en eau propre de l'usine de production provient d'une station d'épuration des eaux usées (15) de l'ensemble résidentiel comme eaux usées purifiées (14), qui est passée pour utilisation à travers un système d'épuration d'eau propre de l'usine de production.

17. Procédé selon la revendication 16, **caractérisé en ce que** les eaux usées sont purifiées par distillation utilisant les chaleurs résiduelles générées au cours de la production d'énergie et l'eau ainsi distillée est utilisée dans les processus de production pour remplacer une certaine quantité d'eau propre.

18. Procédé selon la revendication 17, **caractérisé en ce que** la distillation est utilisée pour purifier les eaux usées propres à l'usine de production pour recyclage ou pour réduire la charge d'eaux usées de l'ensemble résidentiel.

19. Procédé selon l'une quelconque des revendications précédentes, **caractérisé en ce que** les eaux usées (17) générées dans l'usine de production passent par la station d'épuration des eaux usées (15) de l'ensemble résidentiel pour purification.

20. Usine de production pour la fabrication de pâte et/ou papier et/ou carton, laquelle usine est agencée pour utiliser des déchets (1, 10) comme matière première fibreuse et comme carburant et laquelle usine comprend des équipements pour traiter deux courants pré-triés et/ou ramassés séparément (1, 10) de déchets obtenus à partir d'un ensemble résidentiel adjacent, le premier courant (1) contenant principalement des déchets combustibles et le second courant (10) contenant principalement des déchets de papier et/ou carton, lesquels équipements comprennent des dispositifs (32, 45) pour utiliser le premier courant (1) de déchets comme carburant dans la production d'énergie pour les nécessités propres à l'usine de production, des dispositifs (34, 37) pour mettre en pâte, épurer et classer le second courant (10) de déchets ainsi qu'une chaîne de traitement de fibres comprenant un ou plusieurs dispositifs pour le fractionnement (54), désencrage, blanchiment (47), séchage de pâte (52) et fabrication de papier (39), **caractérisée en ce que** les dispositifs pour traiter le premier courant (1) de déchets comprennent en outre un dispositif de séparation (30) par lequel le premier courant (1) de déchets passe d'abord pour séparer une fraction riche en papier et carton (33) des déchets combustibles, ladite fraction riche en papier et carton (33) passant par les dispositifs de mise en pâte, épuration et tri (34, 37) prévus pour traiter le second courant (10) de déchets.

21. Usine de production selon la revendication 20, **caractérisée en ce qu'**elle comprend des provisions pour utiliser des fractions de déchets (4, 6, 9, 36, 40) produits comme sous-produits et contenant une matière première et énergie ou, en variante, pour passer de telles fractions de déchets (9b, 17) à une utilisation utile en dehors de l'usine de production, lesdites fractions de déchets comprenant par exemple des rejets et boues (4, 6, 36, 40) provenant des dispositifs de mise en pâte, épuration, tri, fractionnement, fabrication de papier et/ou désencrage, cendre (9, 9b) produite au cours de la production d'énergie, et eaux usées chaudes (17).

22. Usine de production selon la revendication 20, **caractérisée en ce que** l'usine de production comprend au moins deux chaînes de fabrication de papier ou carton qui sont agencées pour fabriquer des sortes de papier ou carton qui sont différentes les unes des autres, en rapport avec laquelle des fractions de déchets de papier différentes peuvent être utilisées de façon efficace.

23. Usine de production selon l'une quelconque des revendications 20 à 22, **caractérisée en ce que** les équipements pour la fabrication de papier et/ou carton comprennent une machine à papier ou carton pourvue d'un formeur de bande multicouche, grâce à laquelle des fractions de déchets de papier différentes peuvent être utilisées de façon efficace comme matières premières dans différentes couches de papier et/ou carton.

24. Usine de production selon l'une quelconque des revendications 20 à 22, **caractérisée en ce que** l'unité de production d'énergie comprend un réacteur de gazéification (32), qui est agencé pour gazéifier des fractions de déchets combustibles (31, 42) en des gaz produits (44), qui sont agencés pour être brûlés dans une chaudière à combustion ou une turbine à gaz (45).

25. Usine de production selon la revendication 24, **caractérisée en ce que** les équipements pour la fabrication de pâte et/ou papier et/ou carton comprennent des dispositifs de séchage à air chaud, tels que, des séchoirs à infrarouges, séchoirs par contact, séchoirs à bande aéroportée ou autres dispositifs équivalents, et ils sont agencés pour utiliser des gaz produits purifiés (43) produits par le réacteur de gazéification (32) pour la génération d'air de séchage chaud.

26. Usine de production selon la revendication 25, **caractérisée en ce que** le séchage de pâte, papier ou carton est accompli uniquement au moyen de dispositifs de séchage à air chaud sans aucune phase de séchage basée sur l'utilisation de vapeur d'eau.

27. Usine de production selon la revendication 20, **caractérisée en ce qu'**une partie de la cendre produite comme sous-produit au cours de la production (2) d'énergie est agencée pour être utilisée comme charge (9) dans le papier ou carton au cours du processus de fabrication de papier (5).

28. Usine de production selon la revendication 27, **caractérisée en ce que** l'unité de production d'énergie comprend une chaudière à combustion ou réacteur de gazéification séparé, qui est agencé pour brûler seulement une fraction de déchets de papier triée, la cendre produite à partir de ladite fraction étant agencée pour passer par le processus de fabrication de papier pour servir comme charge (9) dans le papier ou carton.

29. Usine de production selon la revendication 27 ou 28, **caractérisée en ce qu'**elle comprend des dispositifs pour la post-incinération de la cendre générée comme un sous-produit au cours de la production (2) d'énergie ou pour la blanchir d'une autre manière avant qu'elle ne soit utilisée comme charge (9) dans le papier ou carton.

30. Usine de production selon la revendication 20, **caractérisée en ce qu'**elle comprend des dispositifs pour utiliser les eaux usées purifiées (14) dérivées de la station d'épuration des eaux usées (15) de l'ensemble résidentiel en tant qu'eau propre dans les processus de production.

31. Usine de production selon la revendication 30, **caractérisée en ce qu'**elle comprend des dispositifs pour purifier les eaux usées ou de circulation par distillation avec la chaleur résiduelle produite par les processus.

32. Usine de production selon l'une quelconque des revendications 20 à 31, **caractérisée en ce que** les eaux usées (17) provenant de l'usine de production (50) passent à la station d'épuration des eaux usées (15) de l'ensemble résidentiel.

33. Usine de production selon la revendication 20, **caractérisée en ce qu'**une usine de transformation de papier ou carton (19) est intégrée dans sa proximité immédiate, laquelle usine est capable de transformer une partie considérable de la production de papier et/ou carton de l'usine de production (50).
